Europäisches Patentamt

(19) European Patent Office

Office européen des brevets

(11) Publication number: **0 230 061**
**B1**

(12) **EUROPEAN PATENT SPECIFICATION**

(45) Date of publication of patent specification: **07.02.90**

(51) Int. Cl.⁵: **B 64 C 9/22**

(21) Application number: **86201732.4**

(22) Date of filing: **06.10.86**

(54) **Trailing edge flaps.**

(30) Priority: **24.01.86 US 822461**

(43) Date of publication of application:
**29.07.87 Bulletin 87/31**

(45) Publication of the grant of the patent:
**07.02.90 Bulletin 90/06**

(84) Designated Contracting States:
**DE FR GB IT NL**

(56) References cited:
**FR-A- 870 963**
**FR-A-2 115 081**
**GB-A- 712 028**
**US-A-2 202 430**
**US-A-2 426 785**
**US-A-3 438 598**
**US-A-3 568 957**
**US-A-4 448 375**

(73) Proprietor: **The Boeing Company**
**P.O. Box 3707**
**Seattle Washington 98124 (US)**

(72) Inventor: **Stephenson, Martin F.**
**1035 Ridgewood Circle S.W.**
**Issaquah King county Washington 98027 (US)**

(74) Representative: **Hoijtink, Reinoud et al**
**OCTROOIBUREAU ARNOLD & SIEDSMA**
**Sweelinckplein 1**
**NL-2517 GK Den Haag (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The invention relates to trailing edge flaps for aircraft and, more particularly to flap supporting systems therefore, the combination of which is defined in the introductory part of claim 1.

A combination of this kind is known from GB—A—712 028.

Flap supporting mechanisms of the present kind have the advantage that these can be housed entirely within in the wing in which the flap is incorporated. This eliminates the bulky external fairings heretofore employed to house those systems and the drag which those systems create.

The invention has for its object to further improve the mechanisms of the kind set forth above.

This is achieved with the measures of the characterizing part of claim 1. In this way the main support and program tracks can be integrated into one unit. One advantage of this novel arrangement is the elimination of wing flexure-induced changes in the angle of the flap. Another is that the integrated track arrangement improves the load distribution in the main, flap-supporting tracks and in the components by which those tracks are supported from the structural framework of the aircraft wing. The integrated track system accomplishes this by effectively shortening the balancing load paths in the main support tracks.

Yet another advantage of the novel flap supporting system is that the need for flap supports at the extremities of the flap is eliminated. The consequence is that the number of flap-supporting mechanisms can be reduced, typically from four to three.

It is also significant that program tracks are required only at the endmost two of the support stations. In the center of the flap only the main support track is needed so the flap-supporting arrangement can be advantageously simpler there.

Furthermore, the novel flap-supporting systems are compatible with the requirements of the sophisticated, high lift, double-slotted flap of the vane/main type required by state-of-the-art wing designs which involve smaller areas and higher aspect ratios.

Other important objects and features and additional advantages of the invention will be apparent from the foregoing and the appended claims and from the accompanying drawings taken in conjunction with the ensuing detailed description and discussion of the invention.

### Brief description of the drawing

In the drawing:

Figure 1 is a partial, and schematic, plan view of an aircraft wing with inboard and outboard flaps that are supported, and translated between stowed and extended positions, in accord with the principles of the present invention;

Figure 2 is a partial plan view of the wing showing, in more detail, one of the systems employed to support the outboard flap and to translate that flap between its stowed and extended positions;

Figure 3 is a third, partial plan view of the wing showing, in still more detail, one of the flap-supporting mechanisms;

Figure 4 is a vertical, chordwise section so taken through the wing and the outboard flap as to show one of two like flap-supporting system as that system appears with the outboard flap in its stowed (or retracted) position;

Figures 5 and 6 are views similar to Figure 4, but show the outboard flap in, respectively, a partly extended position and a fully extended position;

Figure 7 is a view similar to Figure 4 but simplified and showing a can employed to keep fuel from leaking out of the wing past a main track component of the flap-supporting system; and

Figure 8 is a vertical section through the wing taken to show details of one of two like drive systems employed to translate the outboard flap between its stowed and extended positions.

### Detailed description of the invention

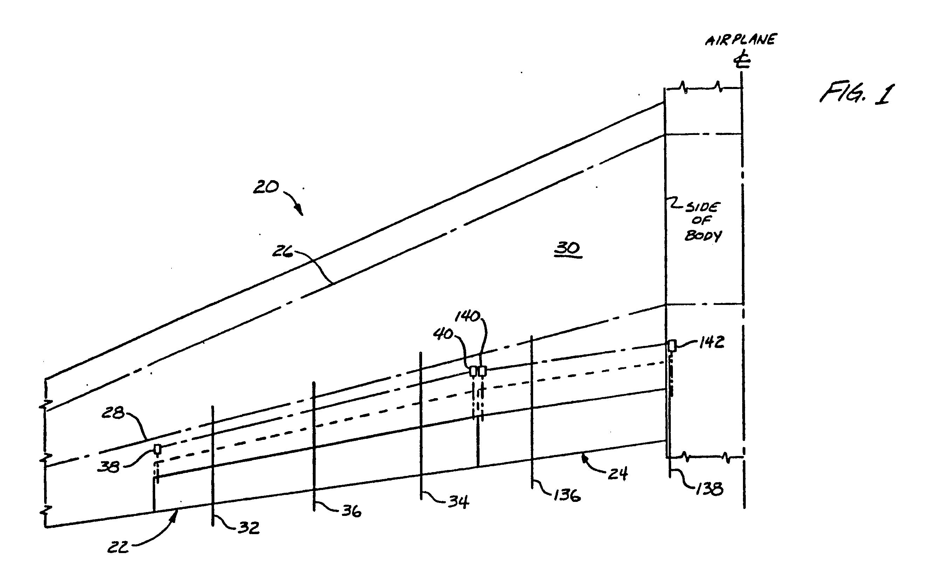

Referring now to the drawing, Figure 1 schematically depicts a high aspect ratio aircraft wing 20 of relatively small area. Incorporated in that wing are outboard and inboard trailing edge flaps 22 and 24, each constructed in accord with, and embodying, the principles of the present invention.

Wing 20 is of conventional construction to the extent that it is an airfoil and has a structural framework, including front and rear spars 26 and 28, and a skin 30 covering the structural framework. The details of wing 20 and its components are not part of the present invention; and they will, accordingly, be described herein only as necessary to an understanding of that invention.

Referring still to Figure 1, the outboard, trailing edge flap 22 of wing 20 is supported from the structural framework of the wing by two support systems 32 and 34 located toward the outboard and inboard ends of the flap and by a third, centrally located flap-supporting system 36.

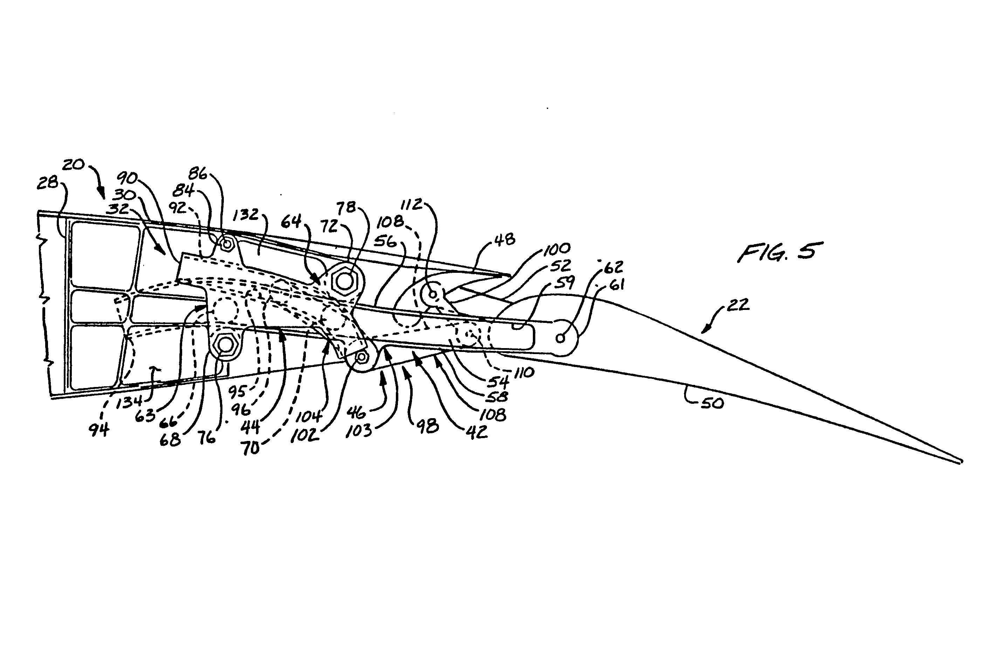

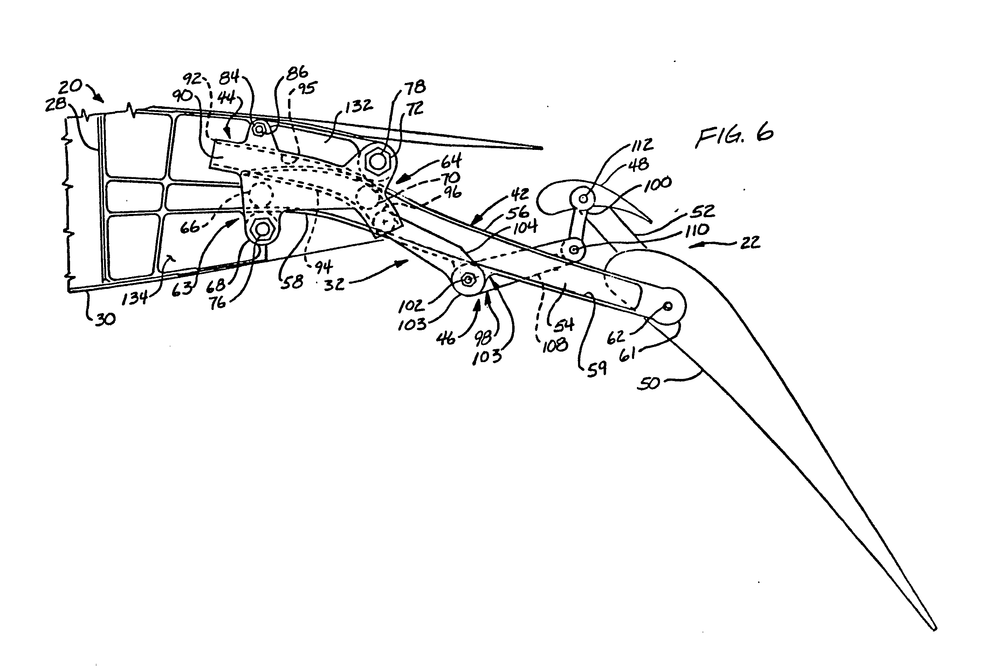

These three support systems, 32, 34, and 36, are completely housable within wing 20. They are designed to: (1) locate flap 22 in a housed (or retracted) position in which the flap uninterruptedly continues the airfoil configuration of wing 20, and (2) to guide and support the flap and to change its angle as the flap is translated or extended chordwise of wing 20 from the housed position to a partially extended position such as those shown in Figure 5 or to the fully extended position shown in Figure 6.

Their novel construction allows the two outermost flap-supporting systems 32 and 34 to be located inwardly from the extremities of flap 22 where the ball screw drives 38 and 40 are located. This is advantageous because it allows the number of flap-supporting systems, and therefore the complexity of the flap, to be reduced.

The ball screw type drive systems 38 and 40 near its extremities are employed to extend and retract flap 22.

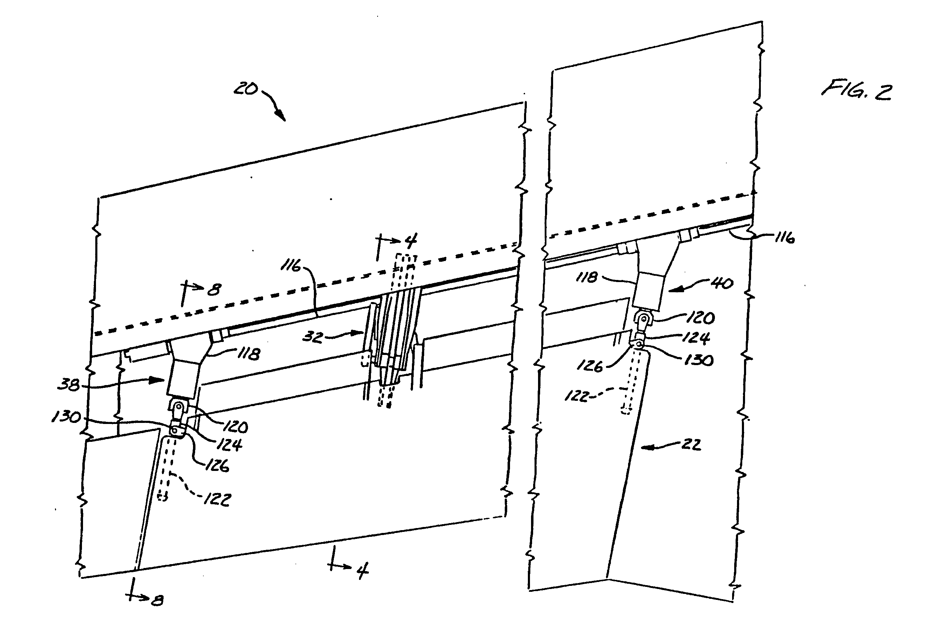

Referring now to Figures 2—6, each of the flap-supporting systems 32 and 34 located inward of the ends of flap 22 includes: a main support track (first track) 42 for supporting and guiding flap 22 as it is extended and retracted and a program track (second track) 44 which cooperates with a crank-and-follower assembly 46 (best shown in Figure 6) to change the angle of flap 22 as the latter is extended.

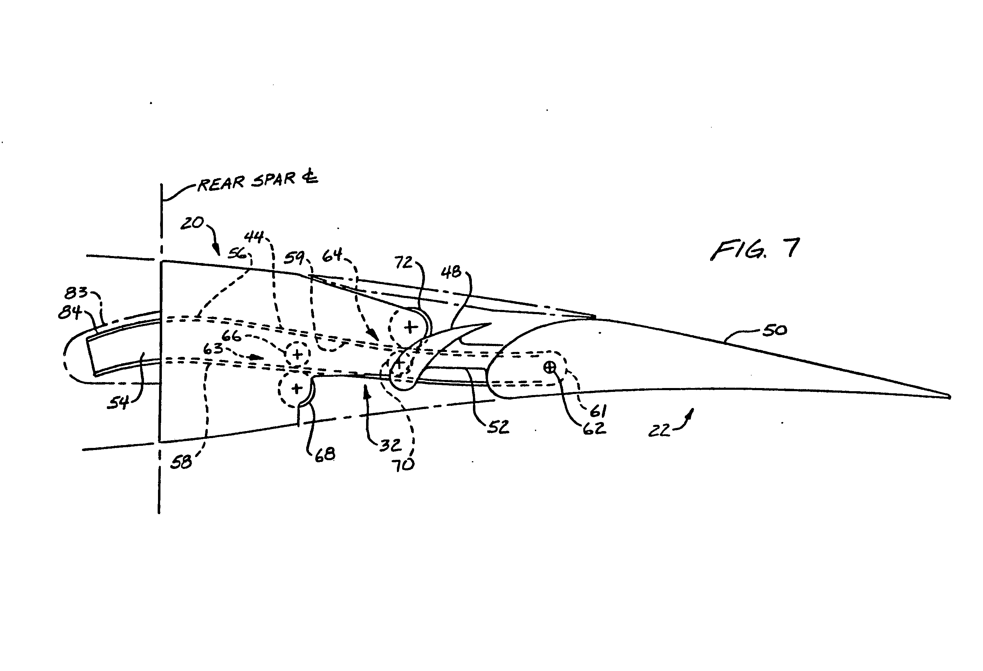

Referring to Figure 7, the third, centrally located flap-supporting system 36 has a displaceable or translatable main support track like that in the support systems 32 and 34 toward the ends of flap 22. It is unnecessary to employ a program track at that central location, which considerably simplifies the overall flap system.

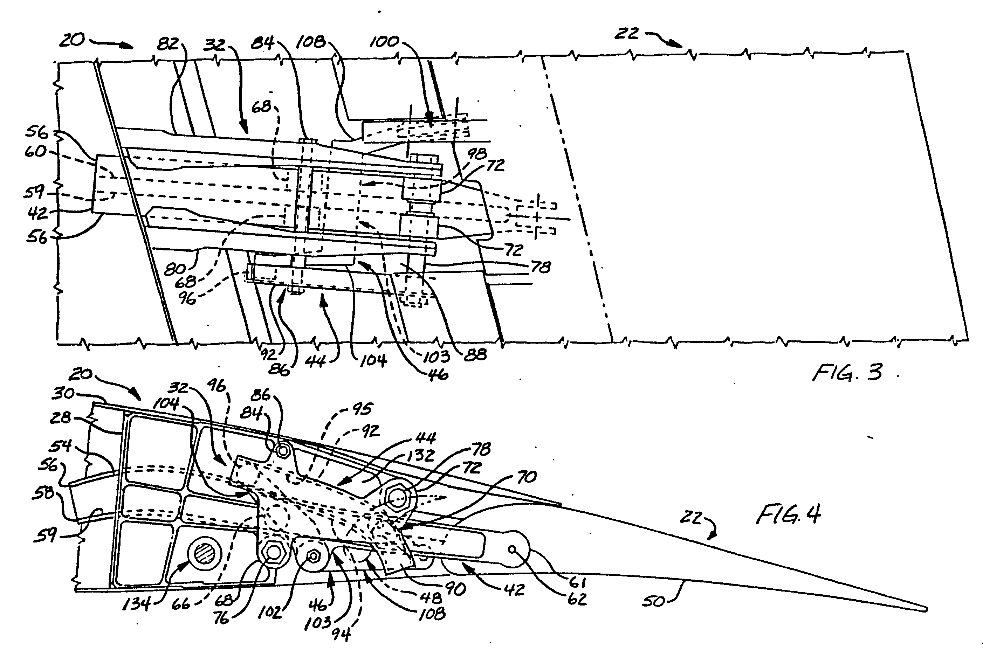

Flap 22 is of the vane/main, double-slotted type. As shown in Figures 4—6, it includes a vane 48 supported by, and spaced forwardly from, a main flap 50 by brackets 52. Both the vane and main flap have airfoil sections, and the vane is so oriented with respect to flap 50 that the vane/main flap combination also has an airfoil shape. In the retracted (or stowed) position of flap 22, vane 48 and its supporting brackets 52 are housed entirely within wing 20 as is shown in Figure 4.

The details of the flap are not part of my present invention, and that component of wing 20 will accordingly not be described further herein except as is necessary to an understanding of that invention.

Referring still to Figures 2—6, the main support track 42 in each of the two flap-supporting systems 32 and 34 is an elongated member which has a vertically oriented web 54 and laterally extending flanges 56 and 58 which are integral with the web. These flanges cooperate to form roller engageable guides 59 and 60 on opposite sides of web 54.

The aft end of track 42 terminates in an integral, bifurcated bracket 61. This bracket embraces a structural component in flap 50, which is pivotably connected to bracket 61 by pivot member 62.

Each of the main support tracks 42 is supported from the structural framework of wing 20 for displacement in the chordwise direction by two sets of roller pairs, one on each side of the track. Each of these two sets of roller pairs includes a forward roller pair 63 and a rear roller pair 64.

As is perhaps best shown in Figure 6, the forward roller pair of the set disclosed in that figure includes roller 66 trapped in guide 59 and a cooperating roller 68 which engages the lower, guide-defining flange 58 of track 42.

The more rearwardly roller pair 64 similarly includes a roller 70 trapped in guide 59 and a roller 72 which engages the upper flange 56 of track 42.

Thus, track 42 is embraced, and guided by, the two forwardmost rollers 66 and 68 and the more rearwardly located rollers 70 and 72 as it is translated (i.e., extended or retracted).

Referring still to Figures 3—6, it will be apparent from the foregoing that there are two rollers 66, two rollers 68, two rollers 70, and two rollers 72. These four pair of rollers are mounted on separate shafts or axles. Two of these are shown in the drawing. They are respectively identified by reference characters 76 and 78.

As is perhaps best shown in Figure 3, the roller supporting axles are mounted in support ribs 80 and 82. These ribs are located on the opposite sides of the main flap support track 42; and they are supported from the structural framework of wing 20.

Referring now specifically to Figure 7, the forward end of main support track 42 extends forwardly through the rear spar 28 of wing 20 when flap 22 is in its stowed, i.e., retracted, position. A can 83 fixed to the rear spar 28 of wing 20 surrounds the forwardly protruding end 84 of the retracted main support track 42 and covers the opening in that spar through which the support track extends. As discussed above, this keeps fuel stored in the interior of wing 20 from leaking to the exterior of the wing.

Referring again to Figures 3—6, it will be remembered that each of the inboard and outboard flap-supporting systems 32 and 34 also includes a program track 44 with which follower-and-crank assembly 46 cooperates to change (and more specifically, increase) the angle of trailing edge flap 22 as the latter is extended from the stowed position (Figure 4) to a partially extended (Figure 5) or fully extended (Figure 6) position.

Program track 44 is fixed against movement relative to wing 20. More particularly, it is fixed alongside main support track 42 to stationary support ribs 80 and 82 by the axles 76 and 78 on which rollers 68 and 72 are mounted and by a bolt 84 and nut 86 with a space 88 between the program and main support tracks as is best shown in Figure 3.

Program track 44 has a vertically oriented base 90 as is shown in Figures 4—6, and there are laterally extending flanges 92 and 94 at the upper and lower edges of that portion. These flanges cooperate to form a guide or raceway 95 for a rotatable, roller type follower 96. That follower is incorporated in the follower-and-crank mechanism 46 employed in cooperation with program track 44 to change the angle of flap 22 as the latter is extended and retracted.

In addition to follower 96, the follower-and-crank mechanism includes a double-armed crank 98 and a motion transmitting link 100.

A pivot pin 102 supports crank 98 for rotation about a horizontal axis extending at right angles to the longitudinal axes of main support track 42 and program track 44. Pivot member 102 is journalled in a boss 103 which depends from the lower edge of main support track 42.

One arm 104 of crank 98 is located on the lefthand side of the main support track as shown in Figure 4. That crank arm extends forwardly through the space between main support track 42 and program track 44. The second arm 108 of the crank extends rearwardly on the opposite side of the support track from crank extending arm 104, balancing the loads imposed upon support ribs 80 and 82 by the crank. Arms 104 and 108 are both rigidly fixed to pivot pin 102 which rotates in boss 103.

As is perhaps most clearly shown in Figure 6, motion transmitting link 100 is connected to the trailing end of rearwardly extending crank arm 108 by a pivot pin 110 and to the vane 48 of flap 22, forwardly of pivot pin 62, by a pivot pin 112.

As flap 22 is extended, main support track 42 is displaced rearwardly from the retracted or stowed position shown in Figure 4 to either an intermediate position such as that shown in Figure 5 or to the fully extended position shown in Figure 6. As the main support track moves rearwardly, it carries crank 98 with it, causing follower 96 to roll rearwardly along the guide 95 formed by the flanges 92 and 94 at the edges of program track 44. This causes crank 98 to rotate in a counterclockwise direction about pivot member 102 at a rate which is initially modest and then increases as flap 22 approaches its fully extended position. This counterclockwise rotation of crank 98 effects a concommitant clockwise rotation of flap 22 about the pivot member 62 by which the flap is pivotably connected to main support track 42.

I pointed out above that flap 22 is extended and retracted by drive systems 38 and 40 of the ball screw type. The input to these is a central drive shaft 116 which is not part of my present invention and will accordingly not be described in detail herein.

Each of the two ball screw drives 38 and 40 includes a transmission 118 powered by shaft 116. The rotatable output 120 of transmission 118, which is again not part of the present invention, is a universal/ball joint which couples the transmission to an externally threaded lead screw 122.

Assembled to the lead screw is an internally threaded follower 124. This follower is mechanically connected to flap 22 by upper and lower brackets 126 (only one of which is shown). The latter are attached to the flap and, at their free ends, are pivotally fixed to follower 124 by pivot pins 130 (one of which is shown in Figure 2).

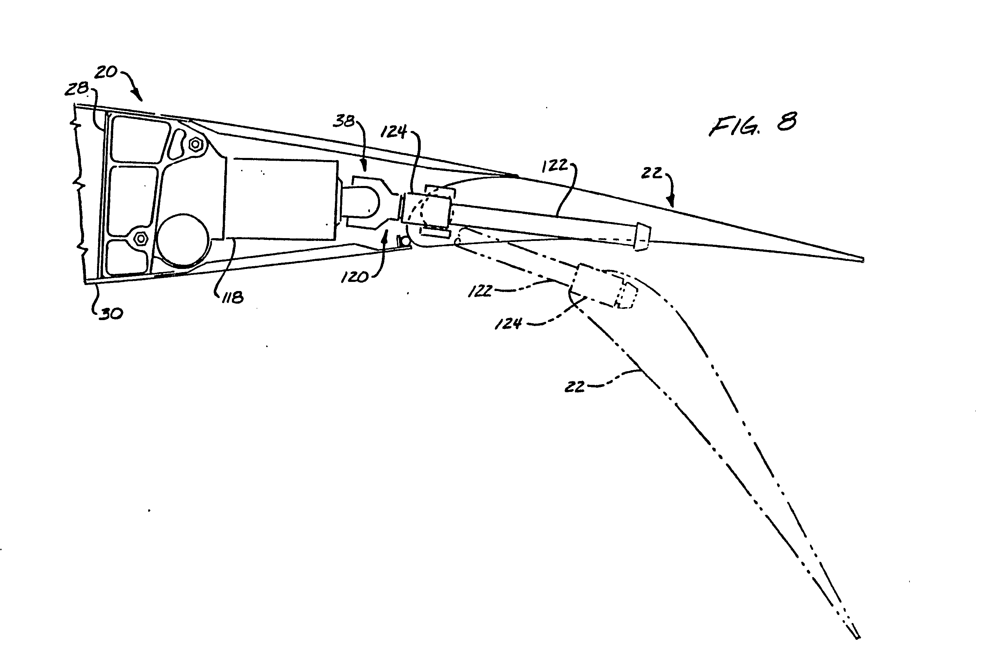

This method of connecting flap 22 to follower 124 keeps the latter from rotating with threaded lead shaft 122. Consequently, as the latter rotates, follower 124 moves rectilinearly along the lead screw. That displaces the flap rearwardly or forwardly in the chordwise direction, depending upon the direction of rotation of the lead screw. As it shifts, the flap follows a path determined by the configuration of the guide 59 and 60 defined by the upper and lower flanges 56 and 58 on main support track 42. Universal joint 120 accommodates the deflection of the lead screw which this entails as is shown in phantom lines in Figure 8.

As discussed briefly above and shown in Figure 7, the third, centrally located flap-supporting system 36 is like those just discussed except for the elimination of the program track and associated follower-and-crank mechanism. These components are not required at that location inasmuch as the inboard and outboard program tracks 44 provide the necessary control over the flap angle as well as the required structural redundancy.

As is shown in Figure 4, for example, the just-described, integrated, side-by-side arrangement of main support track 42 and program track 44 leaves upper and lower spaces 132 and 134 between the support system and the skin 30 of wing 20. Electrical and hydraulic systems can be extended through these passages, eliminating the undesirable circuitous routing of those systems which would otherwise be required.

Referring again to Figure 1, the inboard and outboard support systems 136 and 138 for inboard flap 24 may be of the same construction as the above-described flap-supporting systems 32 and 34; and the ball screw drives 140 and 142 provided to extend and retract the inboard flap may be like the ball screw drives 38 and 40 used to extend and retract outboard flap 22 (because it is relatively short, inboard flap 24 does not require a third, central support as the outboard flap does). In view of the foregoing, the details of the inboard flap-supporting systems and the drive systems for extending and retracting that flap will not be discussed in detail herein.

The principles of the present invention have been developed above primarily by reference to those applications of the invention in which a vane/main type, double-slotted flap is employed. This approach is not intended to limit the scope of those principles which can equally well be employed in the construction of other trailing edge flap systems—such as those of the single-slotted type—by varying the configurations of the main support and program tracks. Variations in aerodynamic requirements such as Fowler motion versus flap angle and slot gap width versus flap angle may be accommodated in a similar manner.

The present embodiment is to be considered in all respects as illustrative and not restrictive, the scope of the invention being indicated by the appended claims rather than by the foregoing description.

**Claims**

1. The combination of an aircraft wing (20); a trailing edge flap (22, 24) for increasing the lift generated by said wing (20) and for providing air braking, and means (32, 34) toward at least each of the two ends of said flap for supporting said flap from said wing, each said flap-supporting means (32, 34) including; a first track (42), means (66, 68, 70, 72) supporting said first track (42) in said wing (20) for movement between a retracted position in which said track is completely housed within said wing and positions in which said track is extended rearwardly from said wing means (62) connecting said flap pivotable about a pivot axis, to the aft end of said first track (42), a second track (44) immovably housed entirely within said wing (20), and means including a follower (96) which is displaceable along said second track (44) as said first track (42) and said flap (22) are extended to change the angle of the flap, characterized in that each flap-supporting means (32) further includes a double-armed crank (98) the arms (104, 108) of the crank extending approximately in the same direction as said first track (42), means (102, 103) pivotably supporting said crank (98) from said first track (42), means fixing said follower (96) to the forward end of the forwardly extending arm (104) of said crank (98), and means (100) so connecting the aft end of the rearwardly extending arm (108) of said crank (98) to said flap that rotation of said crank (98) about its pivot axis (102) effects rotation of said flap about the pivot axis (62) between the flap and said first track (42).

2. The combination defined in claim 1, characterized in that the means connecting the aft arm (108) of the crank (98) to the flap (22) comprises a link (100), means (110) pivotably fixing one end of said link to said aft arm (108) of the crank, and means (112) fixing the other end of said link (100) to said flap at a location spaced forwardly from the pivot axis (62) between said flap and said first track.

3. The combination defined in claim 1, characterized in that said wing (20) includes a structural framework and each of said support means (32) includes means supporting said second track (44) from said structural framework with one arm (104) of said crank (98) disposed between said first (42) and second tracks.

4. The combination defined in claim 1, characterized in that said first track (42) of each flap-supporting means has laterally extending flanges (56, 58) at the upper and lower edges thereof and wherein the means for supporting said first track (42) from the structural framework of the wing (20) comprises first (70, 72) and second (66, 68) roller pairs spaced fore-and-aft of the wing (20), the rollers in one of said pairs respectively embracing the top and bottom of the upper flange (56) and the rollers in the other of said roller pairs respectively embracing the top and bottom of said lower flange (58).

5. The combination defined in claim 4, characterized by a set of first and second roller pairs as aforesaid on each side of said first track (42).

6. The combination defined in one of the preceding claims, characterized in that the means for connecting said first track (42) to said flap (22) comprises an integral bracket (61) at the rear end of said first track (42) and means (62) pivotably fixing said bracket to said flap.

7. The combination defined in one of the preceding claims, characterized in that said aircraft wing (20) is adapted to have fuel stored therein, said first track (92) having a leading end which extends forwardly through spar when said flap (22) is in its retracted position, and said combination further comprising a housing (83) which is supported from the structural framework of the wing and so surrounds said forward end of said track (42) as to keep fuel stored in said wing from leaking around said track (42) through said rear spar.

8. The combination defined in one of the preceding claims, characterized in that said first and second tracks (42, 44) are disposed in side-by-side relationship and thereby free the spaces (132, 134) above and below said flap-supporting means for the housing of hydraulic and electrical systems and for other purposes.

9. The combination defined in one of the preceding claims characterized by a third flap supporting means intermediate the ends of said first and second flap-supporting means, said third flap-supporting means having only one track, and said track being a first track (42) which is extendable rearwardly from said wing and has said flap (22) fixed thereto as aforesaid.

**Patentansprüche**

1. Die Kombination eines Flugzeugflügels (20); einer Hinterkantenklappe (22, 24) zum Erhöhen des durch den Flügel (20) erzeugten Auftriebs und zum Vorsehen einer Luftbremsung, und einer Einrichtung (32, 34) nach wenigstens jedem der beiden Enden der erwähnten Klappe zum Halten der Klappe von dem Flügel her, wobei jede der Klappenhalteeinrichtungen (32, 34) folgendes umfaßt: eine erste Schiene (42), eine Einrichtung (66, 68, 70, 72), welche die erste Schiene (42) in dem Flügel (20) für eine Bewegung zwischen einer eingefahrenen Position, in welcher die Schiene vollständig innerhalb des Flügels untergebracht ist, und Positionen, in welcher die Schiene von dem Flügel nach rückwärts ausgefahren ist, hält, eine Einrichtung (62), welche die um eine Drehachse drehbare Klappe mit dem rückwärtigen Ende der ersten Schiene (42) verbindet, eine zweite Schiene (44), die unbeweglich vollständig innerhalb des Flügels (20) untergebracht ist, und eine Einrichtung, die einen Folger (96) aufweist, der entlang der zweiten Schiene (44) verlagerbar ist, wenn die erste Schiene (42) und die erwähnte Klappe (22) zur Änderung des Winkels der Klappe ausgefahren werden, dadurch gekennzeichnet, daß jede Klappenhalteeinrichtung (32) weiter eine doppelarmige Kurbel (98) aufweist, wobei sich der Arm (104, 108) der Kurbel angenähert in der gleichen Richtung wie die erste Schiene (42) erstreckt, eine Einrichtung (102, 103), welche die Kurbel (98) drehbar von der ersten Schiene (42) aus hält, eine Einrichtung, welche den Folger (96) an dem vorderen Ende des sich nach vorwärts erstreckenden Arms (104) der Kurbel (98) befestigt, und eine Einrichtung (100), die so das hintere Ende des sich nach rückwärts erstreckenden Arms (108) der Kurbel (98) mit der erwähnten Klappe verbindet, daß eine Drehung der Kurbel (98) um ihre Drehachse (102) eine Drehung der erwähnten Klappe um die Drehachse (62) zwischen der Klappe und der ersten Schiene (42) bewirkt.

2. Kombination nach Anspruch 1, dadurch gekennzeichnet, daß der Einrichtung, welche den hinteren Arm (108) der Kurbel (98) mit der Klappe (22) verbindet, ein Glied (100), eine Einrichtung (110), welche ein Ende des Glieds an dem hinteren Arm (108) der Kurbel drehbar befestigt, und eine Einrichtung (112), welche das andere Ende des Glieds (100) an der Klappe an einer Stelle befestigt, die im Abstand vorwärts von der Schwenkachse (62) zwischen der Klappe und der ersten Schiene angeordnet ist, umfaßt.

3. Kombination nach Anspruch 1, dadurch gekennzeichnet, daß der Flügel (20) ein strukturelles Rahmenwerk aufweist und daß jede der Halteeinrichtungen (32) eine Einrichtung aufweist, welche die zweite Schiene (44) von dem strukturellen Rahmenwerk aus trägt, wobei ein Arm (104) der Kurbel (98) zwischen der ersten (42) und zweiten Schiene angeordnet ist.

4. Kombination nach Anspruch 1, dadurch gekennzeichnet, daß die erste Schiene (42) von jeder Klappenhalteeinrichtung sich seitlich erstreckende Flansche (56, 58) an ihrem oberen und unteren Rand hat, und worin die Einrichtung zum Halten der ersten Schiene (42) von dem strukturellen Rahmenwerk des Flügels (20) aus ein erstes (70, 72) und zweites (66, 68) Rollenpaar umfaßt, die im Abstand vorwärts-und-rückwärts von dem Flügel (20) angeordnet sind, wobei die Rollen in einem der Paare jeweils die Oberseite und Unterseite des oberen Flansches (56) und die Rollen in dem anderen der Rollerpaare jeweils die Oberseite und Unterseite des unteren Flansches (58) umfassen.

5. Kombination nach Anspruch 4, gekennzeichnet durch einen Satz aus einem ersten und zweiten Rollenpaar, wie vorerwähnt, auf jeder Seite der ersten Schiene (42).

6. Kombination nach einem der vorhergehenden Ansprüche, dadurch gekennzeichnet, daß die Einrichtung zum Verbinden der esten Schiene (42) mit der erwähnten Klappe (22) einen integralen Arm (61) an dem rückwärtigen Ende der ersten Schiene (42) und eine Einrichtung (62), welche diesen Arm drehbar an der erwähnten Klappe befestigt, umfaßt.

7. Kombination nach einem der vorhergehenden Ansprüche, dadurch gekennzeichnet, daß der Flugzeugflügel (20) dazu geeignet ist, darin Kraftstoff gespeichert zu haben, wobei die erste Schiene (92) ein vorderes Ende hat, das sich nach vorwärts durch den Holm erstreckt, wenn die erwähnte Klappe (22) in ihrer eingefahrenen Position ist, und daß diese Kombination weiter ein Gehäuse (83) umfaßt, welches von dem strukturellen Rahmenwerk des Flügels gehalten ist und so das vordere Ende der Schiene (42) umgibt, daß Kraftstoff, der in dem Flügel gespeichert ist, vor einer Leckage um die Schiene (42) herum durch den rückwärtigen Holm bewahrt wird.

8. Kombination nach einem der vorhergehenden Ansprüche, dadurch gekennzeichnet, daß die erste und zweite Schiene (42, 44) in Seite-an-Seite-Beziehung angeordnet sind und dadurch die Räume (132, 134) über und unter der Klappenhalteeinrichtung für das Unterbringen von hydraulischen und elektrischen Systemen und für andere Zwecke freihalten.

9. Kombination nach einem der vorhergehenden Ansprüche, gekennzeichnet durch eine dritte Klappenhalteeinrichtung zwischen den Enden der ersten und zweiten Klappenhalteeinrichtung, wobei die dritte Klappenhalteeinrichtung nur eine Schiene hat, und wobei die erwähnte Schiene eine erste Schiene (42) ist, welche von dem Flügel aus nach rückwärts ausfahrbar ist und an welcher die erwähnte Klappe (22) befestigt ist, wie vorerwähnt.

## Revendications

1. Combinaison d'une aile d'aéronef (20), d'un volet (22, 24) de bord de fuite destiné à augmenter la portance créée par l'aile (20) et à assurer un freinage aérodynamique, et d'un dispositif (32, 34) placé à proximité de chacune des deux extrémités du volet et destiné à supporter le volet sur l'aile, chaque dispositif (32, 34) de support de volet comprenant un premier rail (42), un dispositif (66, 68, 70, 72) de support du premier rail (42) dans l'aile (20) afin qu'il se déplace entre une position rentrée dans laquelle le rail est totalement logé dans l'aile et des positions dans lesquelles le rail sort vers l'arrière de l'aile, un dispositif (62) raccordant le volet afin qu'il puisse pivoter autour d'un axe de pivotement, par rapport à l'extrémité arrière du premier rail (42), un second rail (44) logé à demeure totalement dans l'aile (20), et un dispositif comprenant un galet (96) qui peut se déplacer le long du second rail (44) lorsque le premier rail (42) et le volet (22) sont sortis afin que l'angle du volet soit modifié, caractérisée en ce que chaque dispositif de support de volet (32) comporte en outre une manivelle à deux bras (98), les bras (104, 108) de la manivelle étant disposés approximativement dans la direction du premier rail (42), un dispositif (102, 103) supportant la manivelle (98) sur le premier rail (42) de manière articulée, un dispositif destiné à fixer le galet (96) à l'extrémité avant du bras (104) dirigé vers l'avant de la manivelle (98), et un dispositif (100) destiné à raccorder l'extrémité arrière du bras (108) tourné vers l'arrière de la manivelle (98) au volet du manière que la rotation de la manivelle (98) autour de son axe de pivotement (102) provoque une rotation du volet autour de l'axe de pivotement (62) entre le volet et le premier rail (42).

2. Combinaison selon la revendication 1, caractérisée en ce que le dispositif de raccordement du bras arrière (108) de la manivelle (98) au volet (22) comporte une bielle (100), un dispositif (110) de fixation articulée d'une première extrémité de la bielle au bras arrière (108) de la manivelle, et un dispositif (112) de fixation de l'autre extrémité de la bielle (100) au volet, à un emplacement qui se trouve à une certaine distance en avant de l'axe de pivotement (62) du volet et du premier rail.

3. Combinaison selon la revendication 1, caractérisée en ce que l'aile (20) a un bâti, et chacun des dispositifs de support (32) comporte un dispositif de support du second rail (44) sur le bâti, un premier bras (104) de la manivelle (98) étant placé entre le premier rail (42) et le second.

4. Combinaison selon la revendication 1, caractérisée en ce que le premier rail (42) de chaque dispositif de support de volet a des flasques (56, 58) qui dépassent latéralement aux bords supérieur et inférieur, et le dispositif de support du premier rail (42) sur le bâti de l'aile (20) comporte une première paire (70, 72) et une seconde paire (66, 68) de galets espacés dans la direction avant-arrière de l'aile (20), les galets d'une première des paires entourant la partie supérieure et la partie inférieure du flasque supérieur (56) et les galets de l'autre paire entourant la partie supérieure et la partie inférieure du flasque inférieur (58).

5. Combinaison selon la revendication 4, caractérisée par un jeu d'une première et d'une second paire de galets de type précité de chaque côté du premier rail (42).

6. Combinaison selon l'une quelconque des revendications précédentes, caractérisée en ce que le dispositif de raccordement du premier rail (42) au volet (22) comporte un support (61) solidaire de l'extrémité arrière du premier rail (42) et un dispositif (62) de fixation articulée du support sur le volet.

7. Combinaison selon l'une quelconque des revendications précédentes, caractérisée en ce que l'aile (20) de l'aéronef est destinée à contenir du carburant, le premier rail (92) ayant une extrémité antérieure qui dépasse vers l'avant à travers un longeron lorsque le volet (22) est dans sa position rentrée, et la combinaison comporte en outre un boîtier (83) qui est supporté par le bâti de l'aile et qui entoure l'extrémité avant du rail (42) de manière que le carburant stocké dans l'aile ne puisse pas fuir autour du rail (42) à travers le longeron arrière.

8. Combinaison selon l'une quelconque des revendications précédentes, caractérisée en ce que le premier et le second rail (42, 44) sont placés côte à côte et dégagent donc des espaces (132, 134) au-dessus et au-dessous du dispositif de support de volet, pour le logement de systèmes hydrauliques et électriques et pour d'autres applications.

9. Combinaison selon l'une quelconque des revendications précédentes, caractérisée par un troisième dispositif de support de volet placé entre les extrémités du premier et du second dispositif de support de volet, le troisième dispositif de support n'ayant qu'un seul rail, et ce rail étant un premier rail (42) qui peut être sortie vers l'arrière et auquel le volet (22) est fixé de la manière précitée.

AIRPLANE ⌀

FIG. 1

SIDE OF BODY

20

26

30

140

40

142

28

38

22

32

36

34

136

24

138

EP 0 230 061 B1

FIG. 2

FIG. 3

FIG. 4

EP 0 230 061 B1

FIG. 5

FIG. 6

REAR SPAR ℄

FIG. 7

EP 0 230 061 B1

FIG. 8